# EUROPÄISCHE PATENTSCHRIFT

(11) **EP 1 057 684 B1**
(45) Veröffentlichungstag und Bekanntmachung des Hinweises auf die Patenterteilung: **29.12.2004**
(21) Anmeldenummer: 00109676.7
(22) Anmeldetag: 06.05.2000
(51) Int. Cl.: B60K 31/04

(54) **Verfahren und Vorrichtung zur Begrenzung der Fahrgeschwindigkeit eines Kraftfahrzeugs**
Method and device for limiting the driving speed of a motor vehicle
Procédé et dispositif pour limiter la vitesse de marche d'un véhicule automobile

(30) Priorität: 31.05.1999 DE 19924947
(43) Veröffentlichungstag der Anmeldung: 06.12.2000
(73) Patentinhaber: DaimlerChrysler AG, 70567 Stuttgart (DE)
(72) Erfinder: Linden, Thomas, 70327 Stuttgart (DE)

(56) Entgegenhaltungen:
- US-A- 4 736 813
- US-A- 5 119 899

## Beschreibung

Die Erfindung betrifft ein Verfahren und eine Vorrichtung zur Begrenzung der Fahrgeschwindigkeit eines Kraftfahrzeugs nach dem Oberbegriff des Anspruches 1 bzw. 8.

Aus der US 4,736,813 ist ein Geschwindigkeitsregetsystem für Kraftfahrzeuge bekannt mit dem die Fahrzeuggeschwindigkeit auf einen vom Fahrer vorgebbaren Sollwert geregelt wird.

Es sind Geschwindigkeits-Regelsysteme bekannt, mit denen eine vom Fahrer vorgegebene oder über ein automatisches Ermittlungssystem errechnete Höchstgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Abstands-Regelungssystemen automatisch ermittelte Höchstgeschwindigkeit nicht überschreiten darf. In dem Geschwindigkeits-Regelsystem werden hierfür ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 C2 ist ein Geschwindigkeits-Regelsystem mit Begrenzerfunktion bekannt, bei dem vom Fahrer eine maximal zulässige Höchstgeschwindigkeit vorgebbar ist. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der Höchstgeschwindigkeit entsprechendes Stellsignal erzeugt, das zur Einstellung des Motors und des Getriebes herangezogen wird.

Wird die Vorgabe der Höchstgeschwindigkeit durch einen manuellen Eingriff des Fahrers außer Kraft gesetzt, so wird das Motormoment vom letzten Wert des vom Begrenzersystem erzeugten Stellsignals ausgehend auf einen Wert erhöht, der der aktuellen Gaspedalstellung entspricht. Falls die aktuelle Gaspedalstellung signifikant über dem letzten Wert des Stellsignals des Begrenzersystems liegt, so versucht das System, das Motormoment in möglichst kurzer Zeit soweit zu erhöhen, daß tatsächliches und gewünschtes Motormoment übereinstimmen. Durch das Bestreben, ein hohes Motormoment aufzubringen, wird das Automatikgetriebe zu Rückschaltungen in kleinere Gänge bei zugleich erhöhter Drehzahl veranlaßt, was zu Irritationen des Fahrers, der sich unter Umständen der erhöhten Gaspedalstellung nicht bewußt ist, und gegebenenfalls zu Fehlreaktionen und Gefahrensituationen führen kann.

Die Druckschrift DE 44 34 022 A1 bezieht sich im Wesentlichen auf Vorgänge, die sich während der aktivierten Geschwindigkeitsbegrenzung abspielen. Bei Kick-Down-Fahrt wird das Getriebe dahingehend beeinflusst, dass keine Rückschaltung in den ersten Gang zugelassen wird. Mit dieser Begrenzung der Gangstufe auf die Gangstufe zwei wird die Rückschaltung in die erste Gangstufe verhindert. Eine derartige Rückschaltung kommt jedoch nur im untersten Geschwindigkeitsbereich in Betracht, beispielsweise bei einer vorgegebenen Geschwindigkeitsbegrenzung auf 30 km/h. Ist dagegen die Geschwindigkeitsbegrenzung im Regelsystem auf eine höhere Geschwindigkeit eingestellt, kann die erste Gangstufe ohnehin nicht eingelegt werden.

Weitergehende Getriebeeingriffe, insbesondere für den Fall, dass die Ist-Gaspedalstellung im Zeitpunkt des Abschaltens der Geschwindigkeitsbegrenzung größer ist als die Gaspedal-Ersatzgröße, sind dieser Druckschrift nicht zu entnehmen.

Der Erfindung liegt das Problem zugrunde, die Fahrsicherheit bei Fahrzeugen mit Automatikgetrieben, die mit einem Geschwindigkeits-Begrenzersystem ausgestattet sind, zu erhöhen.

Dieses Problem wird erfindungsgemäß mit den Merkmalen des Anspruches 1 bzw. 8 gelöst.

Gemäß der Neuerung wird eine untere Gangbegrenzung eingeführt, die im Zeitpunkt des Ausschaltens des Geschwindigkeits-Regelsystems wirksam wird, um zu verhindern, daß das Automatikgetriebe nach der Deaktivierung des Geschwindigkeits-Begrenzungssystems in einer objektiv und subjektiv unangenehmen oder gefährdenden Weise Schaltvorgänge selbsttätig durchführt. Die Situationen, in denen unerwünschte Schaltvorgänge unterbunden oder zumindest eingeschränkt werden sollen, werden selbsttätig von dem System erkannt. Es handelt sich hierbei um Fälle, in denen im Zeitpunkt des Ausschaltens die vom Fahrer ausgeübte tatsächliche Ist-Gaspedalstellung größer ist als der Wert einer Gaspedal-Ersatzgröße, welche vom Begrenzersystem entsprechend der eingestellten Höchstgeschwindigkeit vorgegeben und bei aktivierter Regelung durch das Begrenzersystem der Einstellung des Getriebes sowie gegebenenfalls des Motors und der Bremsen zugrunde gelegt wird. Der Vergleich zwischen Ist-Gaspedalstellung und Gaspedal-Ersatzgröße liefert eine zuverlässige Grundlage für die Entscheidung, ob nach dem Ausschalten eine untere Gangbegrenzung durchgeführt wird. Die Gaspedalstellungen korrelieren mit dem Motormoment; dementsprechend kann auch ein unmittelbarer Vergleich des vom Geschwindigkeits-Begrenzersystem aufgebrachten tatsächlichen Motormoments und des der Ist-Gaspedalstellung entsprechenden Motormoments dem Verfahren und der Vorrichtung zur Steuerung des Automatikgetriebes zugrunde gelegt werden.

Die Gangbegrenzung wird durch Vorgabe einer definierten Mindest-Gangstufe realisiert, deren Bemessung von Fahrzeug-Zustands- und Fahrzeug-Betriebsgrößen abhängt, insbesondere von der aktuellen Fahrzeuggeschwindigkeit, der Last, der Straßenneigung oder der Straßenbeschaffenheit etc. Als zusätzliche, die Gangbegrenzung beeinflussende Größen können elektronische, das Fahrzeug stabilisierende Fahreingriffe wie Antriebs-Schlupf-Regelung, Anti-Blockier-System oder ähnliches berücksichtigt werden.

Die Gangbegrenzung führt dazu, daß nach dem Außer-Kraft-Setzen des Geschwindigkeits-Begrenzersystems ein Rückschalten des Getriebes verhindert oder zumindest begrenzt wird, so daß ein sanftes Ansteigen des Motormoments bzw. der Fahrzeuggeschwindigkeit bis zu dem der Ist-Gaspedalstellung entsprechenden Wert erreicht wird. Steile Anstiege oder Sprünge des Motormoments werden vermieden, wodurch objektiv und subjektiv die Fahrsicherheit erhöht wird.

In zweckmäßiger Weiterbildung bemißt sich der Zeitraum, innerhalb dem als untere Gangbegrenzung eine Mindest-Gangstufe vorgegeben wird, nach dem Verhältnis der Ist-Gaspedalstellung zur Gaspedal-Ersatzgröße. Die untere Gangbegrenzung wird solange aufrecht erhalten, wie nach der Abschaltung der Geschwindigkeitsregelung die Ist-Gaspedalstellung größer ist als die Gaspedal-Ersatzgröße bzw. eine andere, mit der Fahrzeuggeschwindigkeit bzw. dem Motormoment korrelierende Größe. In diesem Fall wünscht der Fahrer ein das aktuelle Motormoment übersteigendes Moment; die Vorgabe der Mindest-Gangstufe wird erst abgebrochen, nachdem das vom Fahrer gewünschte Moment erreicht worden ist.

Vorteilhaft wird sowohl der Ist-Gaspedalstellung als auch der Gaspedal-Ersatzgröße intern im Geschwindigkeits-Begrenzersystem oder einer weiteren Regel- und Steuereinheit des Fahrzeugs jeweils ein Motormoment zugeordnet und der Anstieg der Gaspedal-Ersatzgröße bis zum Erreichen der Ist-Gaspedalstellung gemäß einer vorgegebenen Motormoment-Kennlinie durchgeführt. Über die Vorgabe des Momentenverlaufs kann optimal in das Fahrzeugverhalten eingegriffen werden.

Die Mindest-Gangstufe wird in Abhängigkeit von Fahrzeug-Zustandsgrößen festgelegt, insbesondere in Abhängigkeit der vorgegebenen Fahrzeug-Höchstgeschwindigkeit. Innerhalb des betrachteten Zeitraums, in welchem die Ist-Gaspedalstellung die Gaspedal-Ersatzgröße übersteigt, kann die Mindest-Gangstufe in Abhängigkeit von Zustandsgrößen als vorgegebener Funktionsverlauf bestimmt werden, wobei insbesondere eine Treppenfunktion für die Mindest-Gangstufe als Funktion der eingestellten Höchstgeschwindigkeit herangezogen wird.

Als weitere Abhängigkeit kann der aktuelle Fahrzeug-Betriebsmodus - insbesondere regulärer Betrieb oder Kick-down-Betrieb - berücksichtigt werden. Zweckmäßig wird im Kick-down-Betrieb dem Fahrerwunsch nach schneller Geschwindigkeitszunahme durch einen unterschiedlichen Verlauf der Mindest-Gangstufe Rechnung getragen, wobei vorteilhaft bei im Vergleich höheren vorgegebenen Höchstgeschwindigkeiten als im regulären Betrieb eine nächsthöhere Mindest-Gangstufe vorgegeben wird, so daß im Beschleunigungsbetrieb höhere Motordrehzahlen erreicht werden.

Unmittelbar nach dem Ausschalten der Geschwindigkeitsregelung wird zunächst für einen gegebenen Zeitraum die aktuelle Gangstufe, die im Zeitpunkt des Ausschaltens im Getriebe eingelegt ist, beibehalten. Hierdurch wird ein Totzeitverhalten erzwungen, bei dem ein Gangwechsel erst mit zeitlicher Verzögerung ausgeführt wird. Es kann aber zweckmäßig sein, eine Durchbrechung dieses Totzeitverhaltens durch bestimmte Fahrerreaktionen, beispielsweise Kick-down-Betrieb, vorzusehen.

Weitere Vorteile und zweckmäßige Ausführungsformen sind den weiteren Ansprüchen, der Figurenbeschreibung und den Zeichnungen zu entnehmen. Es zeigen:
- Fig. 1: ein Ablaufdiagramm mit den grundlegenden Verfahrensschritten für eine Steuerung eines Automatikgetriebes,
- Fig. 2: ein Schaubild mit dem Verlauf der Mindest-Gangstufe in Abhängigkeit von der Fahrzeuggeschwindigkeit,
- Fig. 3: ein Schaubild mit dem Verlauf einer Begrenzerfunktion eines Geschwindigkeits-Begrenzersystems,
- Fig. 4: ein Schaubild mit dem Verlauf der Ist- und der Gaspedal-Ersatzgröße,
- Fig. 5: ein Schaubild mit dem zeitabhängigen Verlauf der Gangstufe.

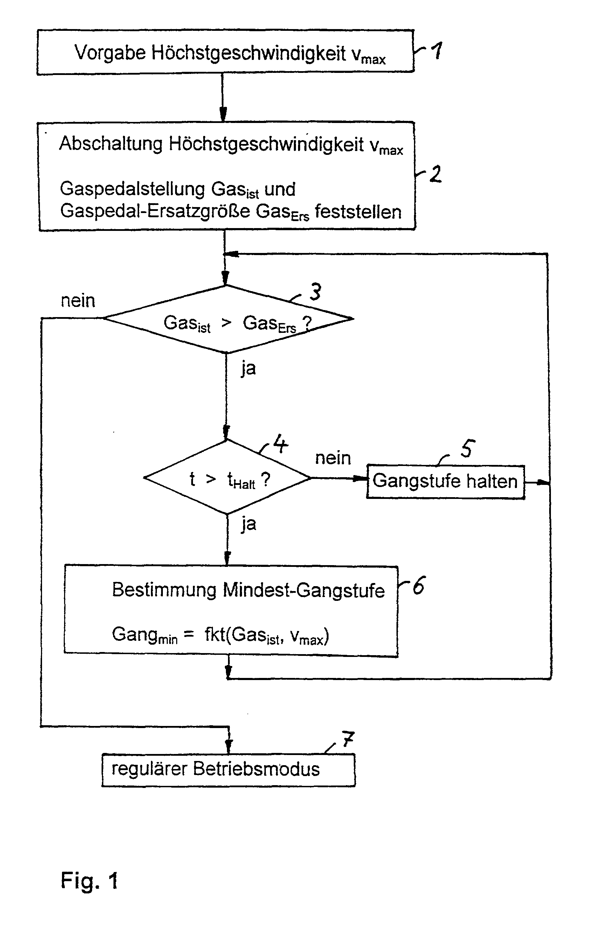

Das nachfolgend beschriebene Ablaufschema gemäß Fig. 1 ist in einer Vorrichtung zur Steuerung eines Automatikgetriebes in einem Kraftfahrzeug realisiert. Diese Vorrichtung umfaßt in einer Regel- und Steuereinheit ein Geschwindigkeits-Begrenzersystem, mittels dem eine Höchstgeschwindigkeit, welche entweder vom Fahrer vorgegeben wird oder automatisch berechnet wird, selbsttätig durch Getriebe- und Motorbeeinflussungen eingehalten werden kann. Zur automatischen Ermittlung der Höchstgeschwindigkeit kann beispielsweise ein Abstands-Regelsystem eingesetzt werden, das in der Lage ist, den Abstand zu einem vorausfahrenden Fahrzeug zu ermitteln und unter Berücksichtigung der aktuellen Fahrzeuggeschwindigkeit den Abstand konstant einzuhalten.

Gemäß dem Ablaufschema nach Fig. 1 wird in einem Verfahrensschritt 1 zunächst im Geschwindigkeits-Begrenzersystem eine Höchstgeschwindigkeit vₘₐₓ vorgegeben, die bis zum außer Kraft Setzen durch manuellen Eingriff des Fahrers gemäß Verfahrensschritt 2 selbsttätig eingehalten wird. In dem Zeitraum zwischen der Abschaltung der Höchstgeschwindigkeit vₘₐₓ gemäß Verfahrensschritt 2 und der Rückkehr in den regulären Betriebsmodus gemäß Verfahrensschritt 7 wird, wie in den Verfahrensschritten 3 bis 6 dargestellt, ein Regeleingriff vorgenommen, welcher die Gangsteuerung eines Automatikgetriebes beeinflußt. Dieser Regeleingriff soll Gefahrensituationen als Folge eines starken Momentenanstiegs im unmittelbaren Anschluß an die Deaktivierung der Geschwindigkeitsbegrenzung vermeiden helfen.

Voraussetzung für den geregelten Getriebeeingriff nach den Schritten 3 bis 6 ist zunächst, daß die aktuelle, vom Fahrer erzeugte Gaspedalstellung Gasᵢₛₜ festgestellt und der Wert der Gaspedalstellung Gasᵢₛₜ gespeichert wird. Weiterhin wird eine Gaspedal-Ersatzgröße Gas_{Ers} ermittelt, die einen am Ausgang des Begrenzersystems anliegenden Wert einer Gaspedalstellung darstellt, der der Geschwindigkeitsbegrenzung auf die eingestellte Höchstgeschwindigkeit zugrunde gelegt wird. Die Ist-Gaspedalstellung Gasᵢₛₜ und die Gaspedal-Ersatzgröße Gas_{Ers} können bei aktivierter Geschwindigkeitsbegrenzung auseinanderfallen, weil die Gaspedal-Ersatzgröße Gas_{Ers} gemäß der vorgegebenen Höchstgeschwindigkeit unabhängig von der tatsächlichen Ist-Gaspedalstellung Gasᵢₛₜ vom Geschwindigkeits-Begrenzersystem vorgegeben wird. Eine höhere Ist-Gaspedalstellung Gasᵢₛₜ des Fahrers hat keinen Einfluß auf die Fahrzeuggeschwindigkeit, weil die Fahrzeuggeschwindigkeit vom Begrenzer auf die zulässige Höchstgeschwindigkeit begrenzt wird. Eine niedrigere höhere Ist-Gaspedalstellung Gasᵢₛₜ als eine mit der Höchstgeschwindigkeit korrelierende Gaspedal-Ersatzgröße Gas_{Ers} führt dagegen immer zur Einstellung des Motormoments und der Fahrzeuggeschwindigkeit gemäß der manuellen Fahrerbetätigung. Insoweit wird im Begrenzersystem eine Minimalauswahl aus Ist-Gaspedalstellung Gasᵢₛₜ und Gaspedal-Ersatzgröße Gas_{Ers} getroffen.

Gegebenenfalls kann bei ausgewiesenen Gaspedalstellungen, beispielsweise bei der Kick-down-Stellung, der Begrenzer außer Kraft gesetzt werden.

Die im Verfahrensschritt 2 festgestellte Ist-Gaspedalstellung Gasᵢₛₜ und die Gaspedal-Ersatzgröße Gas_{Ers} werden im Verfahrensschritt 3 miteinander verglichen. Falls im Verfahrensschritt 3 festgestellt wird, daß die vom Fahrer ausgeübte Ist-Gaspedalstellung Gasᵢₛₜ kleiner ist als oder gleich groß ist wie die Gaspedal-Ersatzgröße Gas_{Ers}, so wird dem "Nein"-Zweig entsprechend zum Verfahrensschritt 7, dem regulären Betriebsmodus ohne regelnden Eingriff des Begrenzers in das Automatikgetriebe, fortgefahren. In diesem Fall liegt die tatsächliche Ist-Gaspedalstellung Gasᵢₛₜ unterhalb des korrespondierenden Wertes der Gaspedal-Ersatzgröße Gas_{Ers}, was bedeutet, daß eine geringere Fahreranforderung vorliegt als im Moment des Abschaltens vom Geschwindigkeits-Begrenzersystem erzeugt wurde; der Fahrerwunsch hat Vorrang vor der Einstellung des Regel- bzw. Begrenzersystems. Die geringere Fahreranforderung hat zur Folge, daß nach der Abschaltung des Geschwindigkeits-Begrenzersystems eine geringere Momentenanforderung vorliegt. Es sind keine Momentensprünge zu erwarten, so daß ohne Gefahr in den regulären Betriebsmodus zurückgekehrt werden kann.

Für den Fall, daß die Fahreranforderung Gasᵢₛₜ größer ist als die Gaspedal-Ersatzgröße Gas_{Ers}, wird dem "Ja"-Zweig entsprechend zum Verfahrensschritt 4 fortgefahren, in welchem untersucht wird, ob der Prozeß sich innerhalb eines Zeitintervalls t_{Halt} befindet, welches sich unmittelbar an die Abschaltung der Höchstgeschwindigkeit vₘₐₓ anschließt. Innerhalb des Zeitintervalls t_{Halt} soll die zuletzt eingenommene Gangstufe beibehalten werden, es soll kein Gangwechsel stattfinden. Sofern sich der aktuelle Prozeß in einem Zeitpunkt vor Beendigung des Zeitintervalls t_{Halt} befindet, wird der "Nein"-Verzweigung entsprechend zum Verfahrensschritt 5 - Gangstufe halten - fortgefahren und daraufhin in einem neuen Zyklus zum Verfahrensschritt 3 zurückgekehrt, der den Beginn des auf die Geschwindigkeitsregelung folgenden Getriebe-Regelungsprozesses markiert.

Für den Fall, daß im Verfahrensschritt 5 festgestellt wird, daß das Zeitintervall t_{Halt} bereits überschritten wurde, wird der "Ja"-Verzweigung entsprechend zum Verfahrensschritt 6 fortgefahren, in der als untere Getriebebegrenzung die Mindest-Gangstufe Gangₘᵢₙ als Funktion der tatsächlichen Gaspedalstellung Gasᵢₛₜ und der im Begrenzersystem zuletzt eingestellten Höchstgeschwindigkeit vₘₐₓ bestimmt wird. Das der Mindest-Gangstufe Gangₘᵢₙ entsprechende Signal wird als Steuer- bzw. Stellsignal dem Getriebe zur entsprechenden Gangeinstellung zugeführt.

Bei der Bestimmung der Mindest-Gangstufe als unterer Gangbegrenzung gemäß Verfahrensschritt 6 können ausgewiesene Pedalstellungen Gasᵢₛₜ, insbesondere eine Kick-down-Pedalstellung, berücksichtigt werden. Hat der Fahrer das Gaspedal vollständig durchgetreten, so wird ein sich unterscheidender Gangstufenverlauf gewählt, der dem Fahrerwunsch nach schnellerer Beschleunigung Rechnung trägt. Insoweit hängt die Bestimmung der Mindest-Gangstufe von der Gaspedalstellung Gasᵢₛₜ ab.

Eine Abhängigkeit von der Begrenzer-Höchstgeschwindigkeit vₘₐₓ ergibt sich insofern, als die Mindest-Gangstufe Gangₘᵢₙ sich gemäß der Wahl der zuletzt eingestellten Begrenzergeschwindigkeit bestimmt.

Der Getriebe-Regelungsprozeß wird solange fortgeführt, bis in der Abfrage gemäß Verfahrensschritt 3 zum regulären Betriebsmodus 7 fortgefahren wird.

Zur Bestimmung der Mindest-Gangstufe können verschiedene Fahrzeugbetriebs- und Zustandsgrößen berücksichtigt werden, wobei bei jedem zyklischen Durchlauf des Bestimmungsprozesses eine aktuelle Mindest-Gangstufe bestimmt wird.

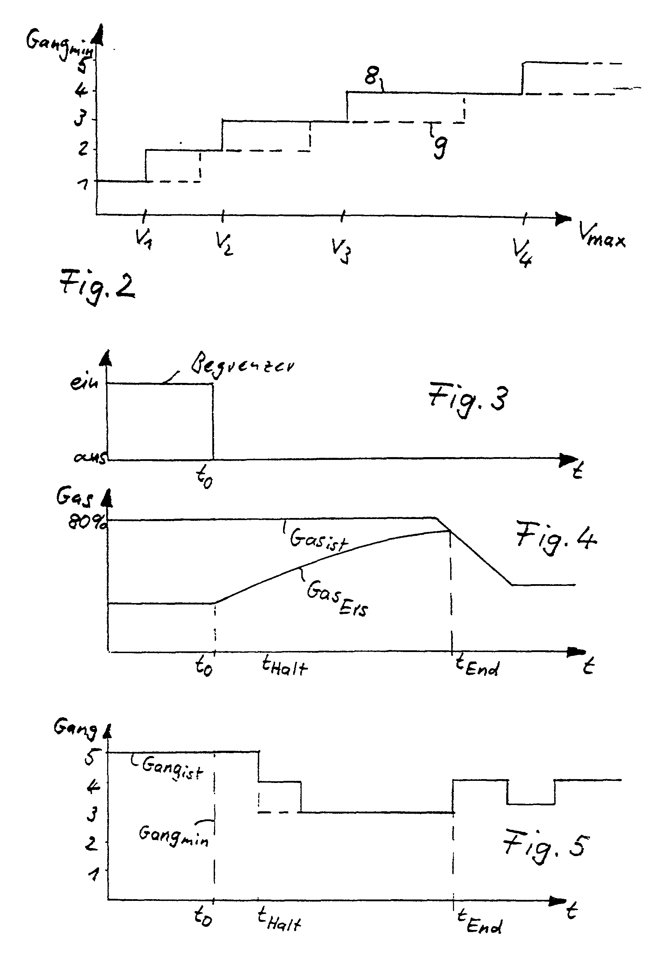

Fig. 2 zeigt einen Verlauf einer unteren Gangbegrenzung mit einer Mindest-Gangstufe Gangₘᵢₙ in Abhängigkeit der vorgegebenen und im Begrenzersystem realisierten Höchstgeschwindigkeit vₘₐₓ. Der Verlauf steigt treppenförmig von Gangstufe 1 bis Gangstufe 5 an, wobei ein Gangwechsel zur nächst höheren Gangstufe bei Erreichen bestimmter ausgewiesener Höchstgeschwindigkeiten v₁ bis v₄ durchgeführt wird. Die Intervalle zwischen benachbarten Höchstgeschwindigkeiten, bei denen ein Treppensprung stattfindet, steigen mit zunehmender Geschwindigkeit an. Es können eine Mehrzahl von Gangₘᵢₙ-Funktionsverläufen vorgegeben werden, die in Abhängigkeit verschiedener Parameter oder Zustandsgrößen aktiviert werden können. Im Ausführungsbeispiel ist eine erste Gangₘᵢₙ-Kurve 8 und eine zweite Gangₘᵢₙ-Kurve 9 vorgesehen, wobei die Kurve 8 für Gaspedalstellungen Gasᵢₛₜ oberhalb der Gaspedal-Ersatzgröße Gas_{Ers}, jedoch unterhalb der Vollgasstellung und die Kurve 9 für den Kick-down-Betrieb verwendet wird.

Die Fig. 3 bis 5 zeigen zeitabhängige Verläufe verschiedener Fahrzeugfunktionen bzw. Fahrzeugzustandsgrößen. In Fig. 3 ist die Schaltfunktion des Begrenzersystems dargestellt, das zweckmäßig ein Funktionselement innerhalb der Regel- und Steuereinheit des Fahrzeugs bildet. Der Begrenzer, mit dem eine Höchstgeschwindigkeit als Maximalgeschwindigkeit definiert werden kann, entspricht dem Verfahrensschritt 1 aus Fig. 1. Bei eingeschaltetem Begrenzer (Schaltstufe "ein"), im Zeitintervall bis t₀, wird die Einhaltung der zulässigen Höchstgeschwindigkeit vom Begrenzer überwacht.

Der Vorgabe der Höchstgeschwindigkeit kann die in Fig. 4 dargestellte Gaspedal-Ersatzgröße Gas_{Ers} zugeordnet werden. Gemäß Fig. 4 liegt bei eingeschaltetem Begrenzer die Gaspedal-Ersatzgröße Gas_{Ers} unterhalb der Ist-Gaspedalstellung Gasᵢₛₜ, welche im Ausführungsbeispiel bei 80% des möglichen Maximalwertes liegt. Nach dem Ausschalten des Begrenzers (Schaltstufe "aus" in Fig. 3) zum Zeitpunkt t₀ wird in der Regel- und Steuereinheit die Gaspedal-Ersatzgröße Gas_{Ers} der tatsächlichen Gaspedalstellung Gasᵢₛₜ angeglichen. Unmittelbar nach dem Ausschalten des Begrenzers zum Zeitpunkt t₀ wird die Gaspedal-Ersatzgröße Gas_{Ers} erhöht, wobei der Anstieg der Gaspedal-Ersatzgröße Gas_{Ers} im Ausführungsbeispiel nichtlinear verläuft und insbesondere sich aus einem vorgegebenen Verlauf für die Motormomenten-Erhöhung ergibt. Die Gaspedal-Ersatzgröße Gas_{Ers} steigt bis zum Erreichen der tatsächlichen Gaspedalstellung Gasᵢₛₜ an. Das Erreichen der tatsächlichen Gaspedalstellung Gasᵢₛₜ legt den Zeitpunkt t_{End} fest. Eine Getrieberegelung findet zwischen dem Zeitpunkt t₀ und t_{End} statt. Nach Erreichen der tatsächlichen Gaspedalstellung liegt keine Divergenz zwischen dem in der Regel- und Steuereinheit erzeugten, korrespondierenden Signal und der Fahrerbetätigung mehr vor, die Getrieberegelung wird zugunsten einer manuellen Einstellung des Fahrers außer Kraft gesetzt.

In Fig. 5 ist der zugehörige Verlauf der Getriebe-Gangstufe dargestellt. Die durchgezogene Linie stellt den tatsächlichen Verlauf Gangᵢₛₜ der Getriebe-Gangstufe dar, die gestrichelte Linie repräsentiert den zeitabhängigen Verlauf Gangₘᵢₙ der unteren Gangbegrenzung, die zwischen den Zeitpunkten t₀ und t_{End} aktiviert wird und vor to bzw. nach t_{End} inaktiv ist. Bei eingeschaltetem Begrenzer bis zum Zeitpunkt t₀ ist im Ausführungsbeispiel die Gangstufe 5 eingelegt, mit der eine vorgegebene Höchstgeschwindigkeit vₘₐₓ realisiert werden kann. Nach dem Abschalten des Begrenzers zum Zeitpunkt t₀ wird der tatsächliche Gangstufenverlauf auf die aktivierte untere Gangbegrenzung Gangₘᵢₙ begrenzt. Es wird zunächst eine Haltezeit bis zum Zeitpunkt t_{Halt} eingehalten, in der unabhängig von der Fahrzeuggeschwindigkeit und äußeren Anforderungen ein Gangwechsel unterdrückt wird, so daß die Gangstufe 5 vorläufig beibehalten wird. Nach Ablauf des Zeitintervalls t_{Halt} schaltet das Getriebe aufgrund der Momentenanforderung stufenweise bis auf die von der unteren Gangbegrenzung Gangₘᵢₙ vorgegebene 3. Gangstufe herunter, ein weiteres Herunterschalten wird durch die untere Gangbegrenzung unterdrückt. Die 3. Gangstufe der unteren Gangbegrenzung zwischen den Zeitpunkten t_{Halt} und t_{End} ergibt sich aus dem Verlauf der Mindest-Gangstufe Gangₘᵢₙ gemäß Fig. 2 und hängt von der zuletzt eingestellten Höchstgeschwindigkeit ab, die im Ausführungsbeispiel zwischen den Grenzgeschwindigkeiten v₂ und v₃ lag.

Nach Beendigung der Gangstufen-Begrenzung zum Zeitpunkt t_{End} folgt das Gangstufen-Schema wieder der regulären Getriebelogik.

## Patentansprüche

1. Verfahren zur Begrenzung der Fahrgeschwindigkeit eines Kraftfahrzeugs auf eine einstellbare Höchstgeschwindigkeit, wobei ein begrenzender Systemeingriff für den Fall erfolgt, daß die vom Fahrer über die Ist-Gaspedalstellung (Gasᵢₛₜ) angeforderte Geschwindigkeit höher ist als die vorgegebene Höchstgeschwindigkeit, wobei unter Berücksichtigung von Fahrzeug-Zustands- und Betriebsgrößen Stellsignale zur Einlegung einer bestimmten Gangstufe im Getriebe erzeugbar sind, derart, daß im Zeitpunkt der Abschaltung der vorgegebenen Höchstgeschwindigkeit eine mit der vorgegebenen Höchstgeschwindigkeit korrelierende Gaspedal-Ersatzgröße (Gas_{Ers}) mit einer Ist-Gaspedalstellung (Gasᵢₛₜ) verglichen wird und für den Fall, daß die Ist-Gaspedalstellung (Gasᵢₛₜ) größer ist als die Gaspedal-Ersatzgröße (Gas_{Ers}), als untere Gangbegrenzung eine definierte Mindest-Gangstufe (Gangₘᵢₙ) im Getriebe vorgegeben wird,
**dadurch gekennzeichnet,**
- **daß** für den Fall, daß im Zeitpunkt der Abschaltung der Höchstgeschwindigkeit die Ist-Gaspedalstellung (Gasᵢₛₜ) größer ist als die Gaspedal-Ersatzgröße (Gas_{Ers}), als Mindest-Gangstufe (Gangₘᵢₙ) zunächst für ein gegebenes Zeitintervall (t_{Halt}) die aktuelle Gangstufe (Gangᵢₛₜ) beibehalten wird,
- **daß** nach Ablauf des Zeitintervalls (t_{Halt}) die Mindest-Gangstufe (Gangₘᵢₙ) in Abhängigkeit des Fahrzeug-Betriebsmodus und/oder Fahrzeug-Zustandsgrößen festgelegt wird.

2. Verfahren nach Anspruch 1,
**dadurch gekennzeichnet,**
**daß** die Mindest-Gangstufe (Gangₘᵢₙ) solange aufrecht erhalten wird, wie nach der Abschaltung der Höchstgeschwindigkeit die Ist-Gaspedalstellung (Gasᵢₛₜ) größer ist als die Gaspedal-Ersatzgröße (Gas_{Ers}).

3. Verfahren nach Anspruch 1 oder 2,
**dadurch gekennzeichnet,**
**daß** nach Abschaltung der Höchstgeschwindigkeit die Gaspedal-Ersatzgröße (Gas_{Ers}) fortlaufend bis zum Erreichen der Ist-Gaspedalstellung (Gasᵢₛₜ) erhöht wird.

4. Verfahren nach einem der Ansprüche 1 bis 3,
**dadurch gekennzeichnet,**
**daß** der Ist-Gaspedalstellung (Gasᵢₛₜ) und der Gaspedal-Ersatzgröße (Gas_{Ers}) jeweils ein Motormoment zugeordnet wird und daß die Gaspedal-Ersatzgröße (Gas_{Ers}) gemäß eines vorgegebenen Momentenverlaufs bis zur Ist-Gaspedalstellung (Gasᵢₛₜ) erhöht wird.

5. Verfahren nach einem der Ansprüche 1 bis 4,
**dadurch gekennzeichnet,**
**daß** ein von der vorgegebenen Höchstgeschwindigkeit abhängiger Verlauf für die Mindest-Gangstufe (Gangₘᵢₙ) festgelegt wird.

6. Verfahren nach einem der Ansprüche 1 bis 5,
**dadurch gekennzeichnet,**
**daß** im Falle eines durchgedrückten Gaspedals (Kick-Down-Effekts) eine modifizierte Mindest-Gangstufe (Gangₘᵢₙ) festgelegt wird.

7. Verfahren nach einem der Ansprüche 1 bis 6,
**dadurch gekennzeichnet,**
**daß** die Begrenzung auf die Mindest-Gangstufe (Gangₘᵢₙ) aufgehoben wird, sobald die Gaspedal-Ersatzgröße (Gas_{Ers}) zumindest gleich groß ist wie die Ist-Gaspedalstellung (Gasᵢₛₜ).

8. Vorrichtung zur Begrenzung der Fahrgeschwindigkeit eines Kraftfahrzeugs auf eine einstellbare Höchstgeschwindigkeit, insbesondere Vorrichtung zur Durchführung des Verfahrens nach einem der Ansprüche 1 bis 7, mit einem Geschwindigkeits-Begrenzersystem, in welchem die dem vom Fahrer über die Ist-Gaspedalstellung (Gasᵢₛₜ) angeforderten Motormoment entsprechende Geschwindigkeit mit der vorgegebenen Höchstgeschwindigkeit vergleichbar ist, wobei unter Berücksichtigung von Fahrzeug-Zustands- und Betriebsgrößen Stellsignale zur Einlegung einer bestimmten Gangstufe erzeugbar und einem Automatikgetriebe des Kraftfahrzeugs zuführbar sind, derart, daß im Zeitpunkt der Abschaltung der vorgegebenen Höchstgeschwindigkeit eine mit der vorgegebenen Höchstgeschwindigkeit korrelierende Gaspedal-Ersatzgröße (Gas_{Ers}) mit einer Ist-Gaspedalstellung (Gasᵢₛₜ) verglichen wird und für den Fall, daß die Ist-Gaspedalstellung (Gasᵢₛₜ) größer ist als die Gaspedal-Ersatzgröße (Gas_{Ers}), dem Automatikgetriebe ein Stellsignal zur Einlegung einer unteren Gangbegrenzung mit einer definierte Mindest-Gangstufe (Gangₘᵢₙ) zuführbar ist,
**dadurch gekennzeichnet,**
- **daß** für den Fall, daß im Zeitpunkt der Abschaltung der Höchstgeschwindigkeit die Ist-Gaspedalstellung (Gasᵢₛₜ) größer ist als die Gaspedal-Ersatzgröße (Gas_{Ers}), als Mindest-Gangstufe (Gangₘᵢₙ) zunächst für ein gegebenes Zeitintervall (t_{Halt}) die aktuelle Gangstufe (Gangᵢₛₜ) beibehalten wird,
- **daß** nach Ablauf des Zeitintervalls (t_{Halt}) ein das Automatikgetriebe beaufschlagendes Stellsignal erzeugbar ist, welches eine Mindest-Gangstufe (Gangₘᵢₙ) in Abhängigkeit des Fahrzeug-Betriebsmodus und/oder Fahrzeug-Zustandsgrößen repräsentiert.

## Claims

1. A process for limiting the road speed of a motor vehicle to an adjustable maximum speed, a limiting system intervention taking place in the event that a speed demanded by the driver in excess of the current accelerator pedal position (Gasᵢₛₜ) is greater than the pre-set maximum speed, it being possible to generate actuating signals to actuate a particular gear in the transmission taking into account vehicle status and operating values in such a manner that when the pre-set maximum speed is switched off a substitute accelerator pedal value (Gas_{Ers}) which correlates with the pre-set maximum speed is compared with a current accelerator position (Gasᵢₛₜ) and in the event that the current accelerator position (Gasᵢₛₜ) is greater than the substitute accelerator pedal value (Gas_{Ers}) a defined minimum gear (Gangₘᵢₙ) is pre-set in the transmission as the lower gear limit,
**characterised in that**
- in the event that when the maximum speed is switched off the current accelerator pedal position (Gasᵢₛₜ) is greater the substitute accelerator pedal value (Gas_{Ers}), the current gear (Gangᵢₛₜ) is initially maintained as the minimum gear (Gangₘᵢₙ) for a given period (t_{Halt}),
- at the end of the period (t_{Halt}) the minimum gear (Gangₘᵢₙ) is set dependent on the vehicle operating mode and/or vehicle status values.

2. A process in accordance with claim 1,
**characterised in that**
once the maximum speed has been switched off, the minimum gear (Gangₘᵢₙ) must be maintained for as long as the current accelerator pedal position (Gasᵢₛₜ) is greater than the substitute accelerator pedal value (Gas_{Ers}).

3. A process in accordance with claim 1 or 2,
**characterised in that**
once the maximum speed has been switched off, the substitute accelerator pedal value (Gas_{Ers}) is increased continuously until it reaches the current accelerator pedal position (Gasᵢₛₜ).

4. A process in accordance with one of claims 1 to 3,
**characterised in that**
the current accelerator pedal position (Gasᵢₛₜ) and the substitute accelerator pedal value (Gas_{Ers}) are each assigned an engine torque and the substitute accelerator pedal value (Gas_{Ers}) is increased until it reaches the current accelerator pedal position (Gasᵢₛₜ) in accordance with a pre-set torque curve.

5. A process in accordance with one of claims 1 to 4,
**characterised in that**
a curve is determined for the minimum gear (Gangₘᵢₙ) dependent on the pre-set maximum speed.

6. A process in accordance with one of claims 1 to 5,
**characterised in that**
in the event of a fully depressed accelerator pedal ("kick down" effect) a modified minimum gear (Gangₘᵢₙ) is set.

7. A process in accordance with one of claims 1 to 6,
**characterised in that**
the limitation to the minimum gear (Gangₘᵢₙ) is lifted as soon as the substitute accelerator pedal value (Gas_{Ers}) is at least equal to the current accelerator pedal position (Gasᵢₛₜ).

8. A device for limiting the road speed of a motor vehicle to an adjustable maximum speed, in particular a device for carrying out the process disclosed in claims 1 to 7, having a speed limitation system in which the speed corresponding to the engine torque demanded by the driver by means of the current accelerator pedal position (Gasᵢₛₜ) can be compared with the pre-set maximum speed, it being possible to generate and to feed to an automatic transmission in the motor vehicle actuating signals to actuate a particular gear in the transmission taking into account vehicle status and operating values in such a manner that when the pre-set maximum speed is switched off a substitute accelerator pedal value (Gas_{Ers}) which correlates with the pre-set maximum speed is compared with a current accelerator position (Gasᵢₛₜ) and in the event that the current accelerator position (Gasᵢₛₜ) is greater than the substitute accelerator pedal value (Gas_{Ers}) an actuating signal to actuate a lower gear limit with a defined minimum gear (Gangₘᵢₙ) can be fed to the automatic transmission,
**characterised in that**
- in the event that when the maximum speed is switched off the current accelerator pedal position (Gasᵢₛₜ) is greater than the substitute accelerator pedal value (Gas_{Ers}), the current gear (Gangᵢₛₜ) is maintained as the minimum gear (Gangₘᵢₙ) for a given period (t_{Halt}),
- at the end of the period (t_{Halt}) it is possible to generate and to send to the automatic transmission an actuating signal which represents a minimum gear (Gangₘᵢₙ) dependent on the vehicle operating mode and/or vehicle status values.

## Revendications

1. Procédé pour limiter la vitesse de marche d'un véhicule automobile à une vitesse maximale réglable, une opération de système de limitation s'effectuant dans le cas où la vitesse demandée par le conducteur par l'intermédiaire de la position effective d'accélérateur (accélérateur_{effective}) est supérieure à la vitesse maximale prédéterminée, des signaux de commande pouvant être générés, en prenant en compte des paramètres de condition et de fonctionnement du véhicule, pour passer un rapport défini dans la boite de vitesses, de telle sorte qu'au moment de l'interruption de la vitesse maximale prédéterminée, un paramètre de remplacement d'accélérateur (accélérateur_{remplacement}) en corrélation avec la vitesse maximale prédéterminée soit comparé à une position effective d'accélérateur (accélérateur_{effective}) et dans le cas où la position effective d'accélérateur (accélérateur_{effective}) est supérieure au paramètre de remplacement d'accélérateur (accélérateur_{remplacement}), un rapport minimal (rapportₘᵢₙ) défini est prédéterminé dans la boîte de vitesses comme limitation de rapport inférieur,
**caractérisé en ce que**
- dans le cas où au moment de l'interruption de la vitesse maximale, la position effective d'accélérateur (accélérateur_{effective}) est supérieure au paramètre de remplacement d'accélérateur (accélérateur_{remplacement}), le rapport actuel (rapport_{effectif}) est conservé comme rapport minimal (rapportₘᵢₙ) pendant un intervalle de temps déterminé (t_{arrêt}),
- après que l'intervalle de temps (t_{arrêt}) se soit écoulé, le rapport minimal (rapportₘᵢₙ) est déterminé en fonction du mode de fonctionnement du véhicule et/ou des paramètres de condition du véhicule.

2. Procédé selon la revendication 1, **caractérisé en ce que** le rapport minimal (rapportₘᵢₙ) est conservé tant que la position effective d'accélérateur (accélérateur_{effective}) est supérieure au paramètre de remplacement d'accélérateur (accélérateur_{remplacement}) après l'interruption de la vitesse maximale.

3. Procédé selon la revendication 1 ou 2, **caractérisé en ce que** le paramètre de remplacement d'accélérateur (accélérateur_{remplacement}) est augmenté de façon continue jusqu'à ce qu'il atteigne la position effective d'accélérateur (accélérateur_{effective}) après l'interruption de la vitesse maximale.

4. Procédé selon l'une des revendications 1 à 3, **caractérisé en ce que** respectivement un couple moteur est associé à la position effective d'accélérateur (accélérateur_{effective}) et au paramètre de remplacement d'accélérateur (accélérateur_{remplacement}) et **en ce que** le paramètre de remplacement d'accélérateur (accélérateur_{remplacement}) est augmenté selon un gradient de couple prédéterminé jusqu'à la position effective d'accélérateur (accélérateur_{effective}).

5. Procédé selon l'une des revendications 1 à 4, **caractérisé en ce qu'**un gradient dépendant de la vitesse maximale prédéterminée est fixé pour le rapport minimal (rapportₘᵢₙ).

6. Procédé selon l'une des revendications 1 à 5, **caractérisé en ce que** dans le cas où l'accélérateur est pressé (effet kick-down), un rapport minimal (rapportₘᵢₙ) modifié est fixé.

7. Procédé selon l'une des revendications 1 à 6, **caractérisé en ce que** la limitation du rapport minimal (rapportₘᵢₙ) est suspendue dès que le paramètre de remplacement d'accélérateur (accélérateur_{remplacement}) est au moins aussi important que la position effective d'accélérateur (accélérateur_{effective}).

8. Dispositif pour limiter la vitesse de marche d'un véhicule automobile à une vitesse maximale réglable, en particulier dispositif pour réaliser le procédé selon l'une des revendications 1 à 7, avec un système limiteur de vitesse, dans lequel la vitesse correspondant au couple moteur demandé par le conducteur par l'intermédiaire de la position effective d'accélérateur (accélérateur_{effective}) peut être comparée à la vitesse maximale prédéterminée, des signaux de commande pouvant être générés, en prenant en compte les paramètres de condition et de fonctionnement du véhicule, pour passer un rapport défini et peuvent être amenés à une boîte automatique du véhicule automobile, de telle sorte qu'au moment de l'interruption de la vitesse maximale prédéterminée, un paramètre de remplacement d'accélérateur (accélérateur_{remplacement}) en corrélation avec la vitesse maximale prédéterminée soit comparé à une position effective d'accélérateur (accélérateur_{effective}) et dans le cas où la position effective d'accélérateur (accélérateur_{effective}) est supérieure au paramètre de remplacement d'accélérateur (accélérateur_{remplacement}), un signal de commande destiné à passer une limitation de rapport inférieur avec un rapport minimal (rapportₘᵢₙ) défini peut être amené à la boîte automatique,
**caractérisé en ce que**
- dans le cas où, au moment de l'interruption de la vitesse maximale, la position effective d'accélérateur (accélérateur_{effective}) est supérieure au paramètre de remplacement d'accélérateur (accélérateur_{remplacement}), le rapport actuel (rapport_{effectif}) est d'abord conservé comme rapport minimal (rapportₘᵢₙ) pendant un intervalle de temps déterminé (t_{arrêt}),
- après que l'intervalle de temps (t_{arrêt}) se soit écoulé, un signal de commande sollicitant la boîte automatique peut être généré, lequel représente un rapport minimal (rapportₘᵢₙ) en fonction du mode de fonctionnement du véhicule et/ou des paramètres de condition du véhicule.
